# EUROPEAN PATENT APPLICATION

(11) **EP 0 960 575 A1**
(43) Date of publication of application: **01.12.1999**
(21) Application number: 98201400.3
(22) Date of filing: 27.04.1998
(51) Int. Cl.: A23P 1/08, A23L 1/325

(54) **Method for dip-coating frozen, particulate foodstuffs**

(71) Applicant: Management & Trading N.V., 3110 Rotselaar (BE)
(72) Inventor: Smeys, Erik JF, 3080 Tervuren (BE)
(74) Representative: Van Reet, Joseph

(57) **Abstract**

A method for preparing a frozen, coated, particulate foodstuff in which frozen foodstuff particles are coated with an edible liquid by freezing the edible liquid thereon. The foodstuff particles, frozen to a predetermined freezing temperature, are dipped in a bath (3) of the edible liquid. This liquid has a solidification point higher than said freezing temperature. The edible liquid is allowed to solidify onto the frozen particles, and the frozen particles, coated with a layer of solidified edible liquid, are removed from the edible liquid bath. In this way, a relatively thick and homogeneous layer can be deposited in one or more coating steps onto the foodstuff particles. The method can further be performed easily according to a continuous process.

## Description

The present invention relates to a frozen, coated, particulate foodstuff in which frozen foodstuff particles are coated with an edible liquid by freezing the edible liquid thereon.

The known coating methods are based on the batch principle and the coating process is conducted in containers in which the foodstuff particles are fed in and are coated by spraying the edible coating on the foodstuff particles while they are being agitated or stirred in the containers, mostly in combination with a freezing process.

The systems commonly used are either open containers in which a device stirs the foodstuff particles or closed containers which agitate the foodstuff particles by rotating around their axis and usually the process is conducted with application of vacuum technique. Reference can be made for example to EP-A-0 560 509 disclosing a method wherein the foodstuff particles are simultaneously frozen and coated by spraying the coating material over the foodstuff particles and agitating them continuously in the presence of an innocuous refrigerant.

The known methods for coating foodstuff particles have following disadvantages :
- a relatively high capital investment requirement;
- a system specifically built for the coating purpose so that it cannot be used for other applications;
- a batch system wherein the containers are filled and emptied bath per batch and which thus involves a limitation on the capacity;
- a time consuming coating process with lots of potential hazards to the products quality and stability
- harsh treatment of the foodstuff particles in the coating process, resulting in high degree of product breakage and rasp (dust)- creation caused by the friction occurring during the agitation or stirring process ;
- the proportion of coating put on the foodstuff particles is not well controllable, especially on non-homogenous foodstuff particles.

An object of the present invention is now to provide a new method for preparing a frozen, coated, particulate foodstuff wherein the foodstuff particles have no longer to be agitated or stirred for being coated on all sides.

To this end, the method according to the invention is characterised in that the foodstuff particles, frozen to a predetermined freezing temperature, are dipped in a bath of the edible liquid, which has a solidification point higher than said freezing temperature, the edible liquid is allowed to solidify onto the frozen particles, and the frozen particles, coated with a layer of solidified edible liquid, are removed from the edible liquid bath.

It has been found that by dipping the frozen foodstuff particles in a bath of edible liquid, a coating layer of a relatively homogeneous thickness is automatically obtained on the foodstuff particles without requiring a special agitating or stirring equipment. Due to the fact that the edible liquid solidifies on the foodstuff particles, a relatively thick coating can further be obtained in one single dipping step or in each of the dipping steps in case more successive dipping steps are performed. Compared to the known coating methods, involving stirring or agitating the foodstuff particles, it is easier to apply a thicker coating layer by the method according to the invention, which is especially interesting when form example the necessary amount of sauce for cooking the foodstuff is to be coated onto the foodstuff particles itself.

In a preferred embodiment, the particles coated in the first dipping step are subjected to a freezing step and are subsequently dipped again in a bath of the edible liquid in order to be coated with a further layer of solidified edible liquid. In this way, even thicker coating layers can be obtained.

By applying one or more dipping and intermediate freezing steps, the foodstuff particles are coated, in a particular embodiment of the invention, with 30 to 70 % by weight, and preferably with 45 to 55 % by weight, of edible liquid, relative to the final weight of the coated, particulate foodstuff.

In the method according to the invention, the edible liquid bath, wherein the foodstuff particles are dipped, is preferably kept at a temperature of at least 0°C. Such a sufficiently high temperature is maintained to reduce the viscosity of the edible liquid to a value that the foodstuff particles can be drawn, for example between conveyor belts, through the bath and that the outer appearance of the foodstuff particles is maintained as much as possible by a homogeneous distribution of the edible liquid over the entire surface of the foodstuff particles. This is especially important when the foodstuff particles have a directly recognisable shape, such as for example shrimp, so that the outer aspect of the coated foodstuff resembles the original foodstuff and can thus directly be recognised notwithstanding the relatively thick coating layer applied thereto.

Further particularities and advantages of the invention will become apparent from the following description of some particular embodiments of the method for preparing a frozen, coated, particulate foodstuff according to the invention and in particular also of a suitable apparatus applied in that method. This description is, however, only given by way of example and is not intended to limit the scope of the invention. The reference numerals used therein relate to the annexed drawings wherein :
Figure 1 shows schematically an apparatus for coating frozen foodstuff particles by means of an edible liquid by dipping them in a bath thereof ;
Figure 2 shows also schematically a succession of the dipping apparatus according to Figure 1 , a freezing tunnel, a second dipping apparatus and a second freezing tunnel.

In the method according to the invention, frozen foodstuff particles are coated with an edible liquid.

The frozen foodstuff is mostly a so-called individually quick frozen (IQF) foodstuff. This means that it must be kept at -18°C at all times during the coating process, in other words the so-called "cold chain" may never be interrupted. The foodstuff particles may be selected from a group such as frozen seafood (fish, shrimp, bivalves, cephalopods), frozen fruits, frozen vegetables, frozen meat.

The average size of a foodstuff particle can range from 0.1 gr to 50 gr. The foodstuff material may have been previously cooked or blanched. The foodstuff particles may be homogenous or may be a mixture of different foodstuffs. The edible liquid by which the foodstuff particles are coated is all encompassing substantial and provides ample protection against dehydration and rancidity. It may be selected from vegetable, animal or synthetic oils, fats, fat fractions, fat substitutes, fat derivatives, sauces, aromatising liquid compositions, flavouring compositions and mixtures thereof. According to the invention, a special preference is given to sauces, in particular to cold binding sauces, which are coated onto seafood, in particular on shrimp. The obtained coated foodstuff is particularly suited for being cooked in a micro-wave oven, since in such an oven, the inner portion, namely the seafood, is cooked stronger than the sauce coating which is in fact simply heated.

The method according to the present invention, the foodstuff particles are coated with the edible liquid by dipping them in a bath thereof. An essential feature of the invention is that, before being dipped in the edible liquid, the foodstuff particles are frozen to a temperature which is sufficiently lower than the solidification point of the edible liquid. In this way, the edible liquid does not simply adhere to the frozen foodstuff particles but it solidifies thereon due to the heat transfer between the cold foodstuff particles and the relatively warmer edible liquid. Considerably larger amounts of edible liquid can thus be coated onto the foodstuff particles compared to a simple adhesion of the liquid to the foodstuff.

It has been found that, when dipping the foodstuff particles for 20 to 60 seconds, and in particular for 30 to 45 seconds, in the edible liquid bath, a substantial amount of edible liquid is "frozen" onto the foodstuff particles. This can be done in one or more dipping steps, depending on the amount of edible liquid which has to be coated onto the foodstuff. Usually, this amount will comprise 30 to 70 % by weight, and more particularly 45 to 55 % by weight of edible coating liquid relative to the final weight of the coated, particulate foodstuff. This will in particular be the case when the coating liquid is a sauce.

An important advantage of the method according to the invention is that it can easily be applied in a continuous process instead of in a batch process. An apparatus suitable for applying such a continuous process is shown schematically in the figures.

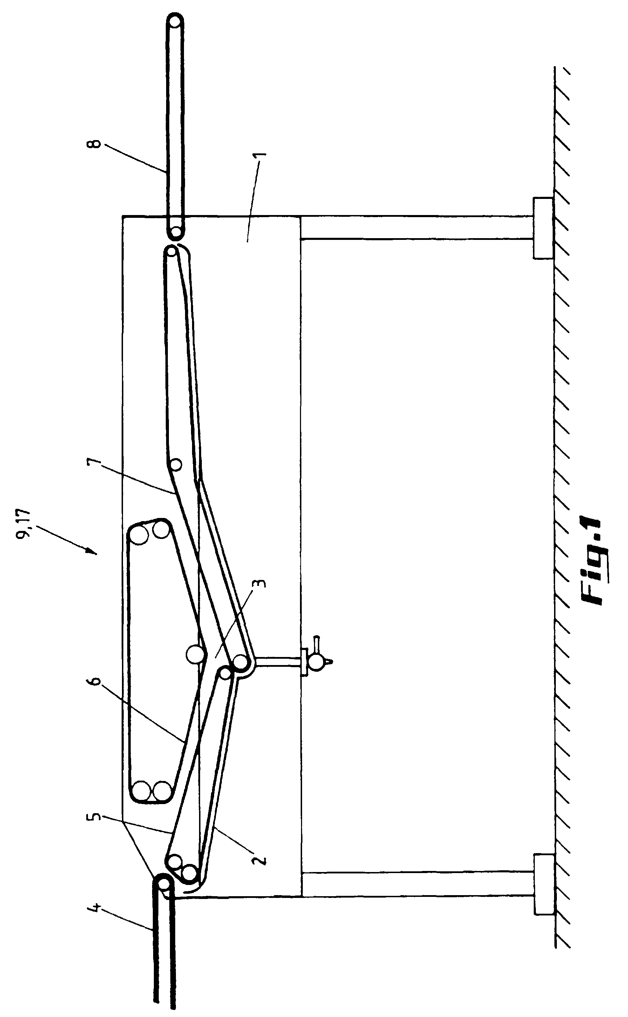

The apparatus shown in Figure 1 for dipping the frozen foodstuff particles in a liquid coating comprises a frame 1 supporting an open container 2 with a bath 3 of edible liquid. The frozen foodstuff particles are fed by a conveyor belt 4 between a bottom conveyor belt 5 and a top conveyor belt 6 by means of which they are drawn through the liquid bath 3. At the bottom, the first bottom conveyor belt 5 delivers the foodstuff particles to a second bottom conveyor belt 7 which also cooperates with the top conveyor belt 6 to draw the foodstuff particles again out of the liquid bath. The different conveyor belts are composed of a stainless steel grit so that an excess of liquid can drop of the coated particles. The second bottom conveyor 7 delivers the coated foodstuff particles on a further conveyor belt 8, at the end of the dipping apparatus, which may be driven at a higher speed in order to increase the mutual distances between the different particles.

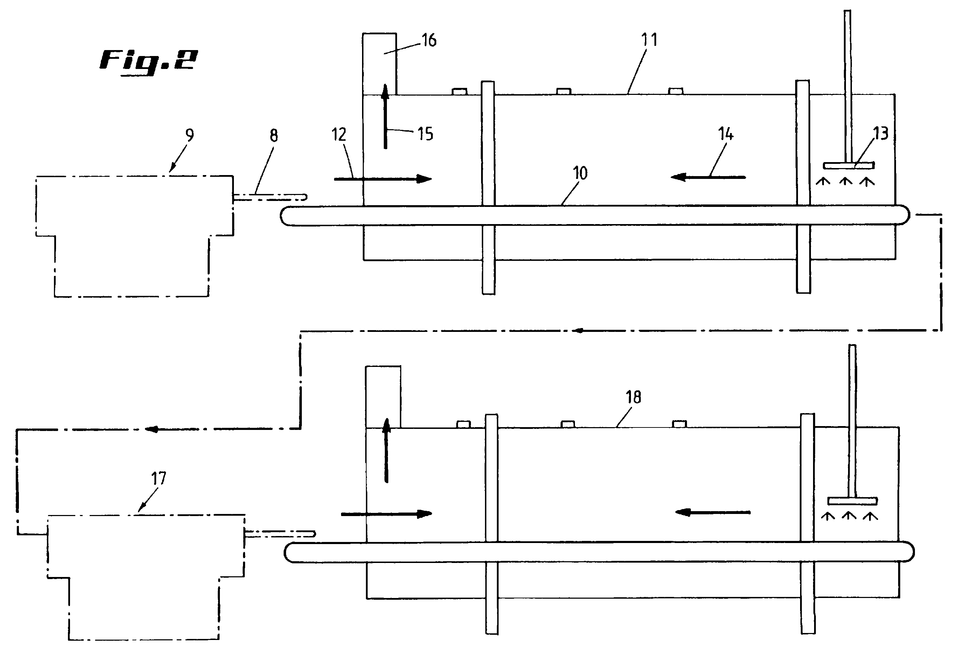

As shown in Figure 2, the conveyor belt 8 delivers the coated particles subsequently, from the dipping apparatus 9, to another conveyor belt 10 which runs through a freezing tunnel 11, in the direction of arrow 12. At the end of this freezing tunnel 11, liquid nitrogen gas is injected, through a spray nozzle system 13, and blown in counter current, according to arrows 14 and 15, through the freezing tunnel 11. At 16, an opening is provided for exhausting the nitrogen gas. For a skilled person, it will be clear that other types of continuous freezing systems can be used and also other types of refrigerants, for example liquid CO₂ instead of liquid N₂.

At the end of the freezing tunnel, the coated foodstuff can be packaged in case one dipping step provides already the necessary amount of edible liquid. In this case, the freezing tunnel 11 may be operated at a temperature of for example -50°C in order to cool the coated foodstuff particles to a suitable temperature of for example -22°C.

According to Figure 2, the coated and cooled foodstuff particles are however dipped for a second time in an edible liquid bath, more particularly in a second dipping apparatus 17, identical to the one shown in Figure 1. In this case, the coated foodstuff particles are preferably cooled down in the freezing tunnel 11 to a lower temperature, in particular such that at least the coating layer thereof has a temperature lower than -25°C, and more particularly lower than -30°C, so that a larger amount of edible liquid can be solidified thereon in the second dipping apparatus 17.

After the second dipping apparatus 17, a second freezing tunnel 18 is provided, identical to the first freezing tunnel 11, which cools the coated foodstuff particles down again (to about -22°C) before being packaged.

As explained hereinabove, it is important in the described continuous process that the cold chain is not interrupted, i.e. that the temperature of the frozen foodstuff particles never exceeds -18°C.

It has been found that this is feasible in practice with the dipping process without having to add a refrigerant during the coating process itself. The temperature that will be reached by the foodstuff particles depend on the initial temperature thereof, the temperature of the coating liquid bath and the period of contact between the particles and the coating liquid. It has been found that, in this respect, the temperature of the edible liquid bath is preferably lower than 5°C, and more preferably lower than 3°C. When the initial temperature of the foodstuff particles is lower than -20°C, and preferably lower than -22°C, they can be kept a sufficient period of time in the coating bath, in particular 20 to 60 seconds, without reaching a too high temperature.

The temperature of the edible liquid should however not be too low, and comprises preferably at least 0°C, so that it remains sufficiently fluid for drawing the foodstuff particles therethrough and for enabling the fluid to coat the particles very evenly and regularly. tests have shown that no separate cooling or heating means are to be provided in the dipping apparatus to keep the edible fluid at the appropriate temperature. The temperature could indeed be kept constant by means of the continuous replenishing of the coating bath.

### EXAMPLE

A sauce was prepared by mixing the following ingredients at room temperature in two steps, first the seasoning together with water at high speed for about 2 minutes and secondly the fresh cream was mixed in at low speed.

### Composition:

- Curry Seasoning made of whole milkpowder, modified starch, flour, spices, starch, salt, sugar, broth powder, flavouring, yeast extract, acidifying agent and flavour enhancers = 19.5 Kg
- Water =19.5 Litres
- Cream = 28.5 Litres

100 Kg of IQF blanched shrimp (44 pieces per Lb = ±10 gr per shrimp) was brought into a whopper feeding the product at a temperature of -12°C into the first dipper 10 filled with the curry cream sauce. The product is taken through the dipper on a conveyor belt and is than fed onto the conveyor belt leading into the first linear cryogenic tunnel freezer 11 operating at a temperature of 70°C, cooling the product (including the first layer of sauce coating) to -35°C. Exiting the first linear cryogenic tunnel freezer 11 the product is fed into the second dipper 17, equally filled with curry cream sauce and again through which the product is fed onto the conveyor belt leading into the second linear cryogenic tunnel freezer 18 operating at a temperature of -50°C, cooling the product (including the two layers of sauce coating) to -22°C. The coated shrimp, each weighing about 20 gr are immediately packed into bulk containers and are ready for packing

## Claims

1. A method for preparing a frozen, coated, particulate foodstuff in which frozen foodstuff particles are coated with an edible liquid by freezing the edible liquid thereon, characterized in that the foodstuff particles, frozen to a predetermined freezing temperature, are dipped in a bath of the edible liquid, which has a solidification point higher than said freezing temperature, the edible liquid is allowed to solidify onto the frozen particles, and the frozen particles, coated with a layer of solidified edible liquid, are removed from the edible liquid bath.

2. A method according to claim 1, characterized in that the edible liquid bath is kept at a temperature lower than 5 °C, and preferably at a temperature lower than 3 °C.

3. A method according to claim 1 or 2, characterized in that the edible liquid bath is kept at a temperature of at least 0 °C.

4. A method according to any one of the claims 1 to 3, characterized in that the frozen foodstuff particles are dipped in the edible liquid bath for 20 to 60 seconds, and preferably for 30 to 45 seconds.

5. A method according to any one of the claims 1 to 4, characterized in that, before being dipped in the edible liquid bath, the foodstuff particles are frozen to a temperature lower than -20 °C, and preferably to a temperature lower than or equal to -22 °C.

6. A method according to any one of the claims 1 to 5, characterized in that, after being removed from the edible liquid bath, the coated particles are subjected to a freezing step and are subsequently dipped again in a bath of the edible liquid so as to be coated with a further layer of solidified edible liquid.

7. A method according to claim 6, characterized in that during said freezing step, at least the coating layer of the coated particles is frozen to a temperature lower than -25 °C, and preferably to a temperature lower than -30 °C.

8. A method according to any one of the claims 1 to 7, characterized in that the foodstuff particles are coated with 30 to 70 % by weight, and preferably with 45 to 55 % by weight, of edible liquid, relative to the final weight of the coated, particulate foodstuff.

9. A method according to any one of the claims 1 to 8, characterized in that the foodstuff particles are selected from the group of seafood, including fish, shrimp, bivalves and cephalopods, fruits, vegetables and meat, preference being given to seafood and in particular to shrimp.

10. A method according to any one of the claims 1 to 9, characterized in that the edible liquid is selected from the group of vegetable, animal or synthetic oils, fats, fat fractions, fat substitutes, fat derivatives, sauces, amortising liquid compositions, flavouring compositions and mixtures thereof, a particular preference being given to the use of sauces, in particular cold binding sauces, as the edible liquid.

11. A method according to any one of the claims 1 to 10, characterized in that it is performed according to a continuous process wherein the frozen particles are dipped into the edible liquid bath by guiding them through this bath, in particular between conveyor belts.
